Europäisches Patentamt

European Patent Office

Office européen des brevets

(19)

(11) Publication number: **0 049 584**
**B1**

# (12) EUROPEAN PATENT SPECIFICATION

(45) Date of publication of patent specification: **09.01.85**

(21) Application number: **81304371.8**

(22) Date of filing: **23.09.81**

(51) Int. Cl.⁴: **C 12 G 3/12,** C 12 F 1/08, B 01 D 1/28, B 01 D 1/26

(54) **Distillation system.**

(30) Priority: **04.10.80 GB 8032057**

(43) Date of publication of application:
**14.04.82 Bulletin 82/15**

(45) Publication of the grant of the patent:
**09.01.85 Bulletin 85/02**

(84) Designated Contracting States:
**AT BE DE FR GB IT NL SE**

(56) References cited:
**CH-A- 336 788**
**CH-A- 353 335**
**FR-A- 449 399**
**FR-A- 838 696**
**FR-A- 898 046**

(73) Proprietor: **THE INVERGORDON DISTILLERS LIMITED**
**Ashley House 181-195 West George Street Glasgow G2 2NL Scotland (GB)**

(72) Inventor: **Gillie, Allan**
**2 Ash Hill**
**Evanton Ross-shire (GB)**

(74) Representative: **Szczuka, Jan Tymoteusz et al Cruikshank & Fairweather 19 Royal Exchange Square**
**Glasgow G1 3AE Scotland (GB)**

Courier Press, Leamington Spa, England.

## Description

This invention relates to distillation systems and in particular to distillation systems used in producing alcoholic beverages in which heat energy consumption is reduced.

Conventionally, as for example in the whisky distilling industry, distillation is carried out on a batch basis with heat energy being supplied to each distillation stage from an external source and with most if not all of this heat energy subsequently going to waste. In whisky distillation a batch of fermented wash is first heated and distilled in a wash still to produce low wines. A batch of low wines so obtained is then heated and distilled in a spirit still to increase further alcoholic content and produce a product spirit. In the case of each stage heat energy is supplied from an external source and substantially lost.

It has been previously proposed to recover heat in distillation processes for other liquids, from the vapourized component in order to render the processes more economic; and although some high strength potable spirit products, such as those derived from cereal core and molasses, are produced in this way by utilizing a continuous distillation or 'rectification' process, it is not possible to use such processes for the distillation of lower strength alcohol beverages traditionally produced by the double batch still method without significantly affecting the balance of minor constituents or congeners which go up to make the relatively complex mixtures constituting alcoholic beverages. It will be appreciated that even apparently minor changes in the proportions of the congeners can substantially affect the taste properties and hence the acceptability of the final product which can be particularly serious in view of the very competitive nature of this field and the paramount importance of taste. It is an object of the present invention to overcome or minimize one or more of the above disadvantages and in particular to provide a distillation system for the production of an alcoholic beverage in which net heat energy consumption (i.e. heat supplied less useful heat recovered) is reduced without significantly affecting the quality of the product.

The present invention provides in one aspect a process for the production of an alcoholic beverage which process comprises a first alcohol distillation step wherein a first liquid having a first alcohol content is distilled to produce a first alcohol containing vapour having a second elevated alcohol content higher than that of said first liquid, which first vapour is condensed to a second liquid having a second, elevated alcohol content, and a second alcohol distillation step wherein said second liquid is distilled to produce a second alcohol containing vapour which is condensed to a third liquid having a third, further elevated, alcohol content characterized in that said first distillation step is carried out in a continuous distillation column, the first alcohol containing vapour being compressed (30), and, if necessary, de-superheated so as to produce a saturated vapour, and at least part of the compressed saturated alcohol containing vapour passed through a heat exchanger through which heat exchanger is circulated at least part of the second liquid having a lower temperature than the condensation temperature of said saturated vapour so that heat is absorbed by said second liquid and at least one part of said saturated vapour condensed to said second liquid and in that in said second alcohol distillation step a batch of said second liquid is distilled in a batch distillation step, said batch of second liquid being circulated through a said heat exchanger in a spirit still connected thereto for supplying heat to said batch of second liquid from said first vapour, so as to recover in said third liquid a substantial proportion of the minor constituents and congeners of the liquid distillate product recovered in a conventional double batch distillation process for the production of said alcoholic beverage.

By means of the present invention a significant proportion of the heat employed in the above mentioned distillation process can be recovered thereby reducing net heat energy consumption. The recovery of this heat energy is maximised by extracting in particular the latent heat of vaporization of the alcohol containing vapour and the efficiency of the extraction further improved by increasing the enthalpy and temperature of the vapour, at a relatively low additional energy cost, with the aid of a mechanical compressor.

It will be noted that in the process of the invention the spirit still stage is substantially identical to that in a conventional distillation process so that the congener balance is substantially unaffected by the use of the process of the present invention instead of the traditional process. In the 'wash still' stage—now replaced by a continuous distillation system— the temperature and pressure in the column can be carefully controlled to produce a 'low wines' vapour having a particular desired alcohol content—normally corresponding to that of 'low wines' obtained in the traditional batch-type wash still. The pressure control is conveniently achieved in the process of the present invention by recycling a small part of the 'low wines' vapour to the distillation column.

The heat energy recovered may be used for a variety of purposes. Conveniently though it is used in another step of the process for the production of the alcohol containing beverage thereby providing a more or less integrated process or in a process for the production of a useful by-product. Thus in the case of whisky production the fluid circulated through the heat exchanger would most conveniently be the low wines being distilled in a spirit still.

It will be appreciated that with a process of the present invention the low wines vapour is being distilled more or less continuously whilst the spirit still operation is carried out in batches. According to a preferred aspect of the invention therefore the saturated vapour is circulated selectively through alternate ones of the heat exchange means of a plurality of spirit still for sequential distillation of different batches of said second liquid in said spirit stills.

Heat energy recovered could also be used in the reduction of the pot ale residue obtained from the distillation column (which actually replaces the wash still stage in a conventional process), to a syrup suitable for use as an animal feedstuff additive. This may be effected directly, or indirectly by circulating water through a heat evaporator to produce steam which can then be used in a single stage or multi effect evaporator.

In another aspect the present invention provides an apparatus for use in a preferred form of the process of the present invention which apparatus comprises a continuous distillation column having a lower end portion connected to a reboiler provided with a steam inlet connected to a steam supply for heating, in said reboiler, residual liquor from said first distillation step circulating through said reboiler and said lower end portion of said column, and an upper end portion provided with a fermented liquid inlet and a first alcohol containing vapour outlet, connected via a compressor, a desuperheating means, and valve means, to at least two heat exchange means arranged for heating batches of the second alcohol containing liquid being distilled in respective batch distillation stills, said valve means being arranged for selectively passing said vapour to alternate ones of said heat exchange means.

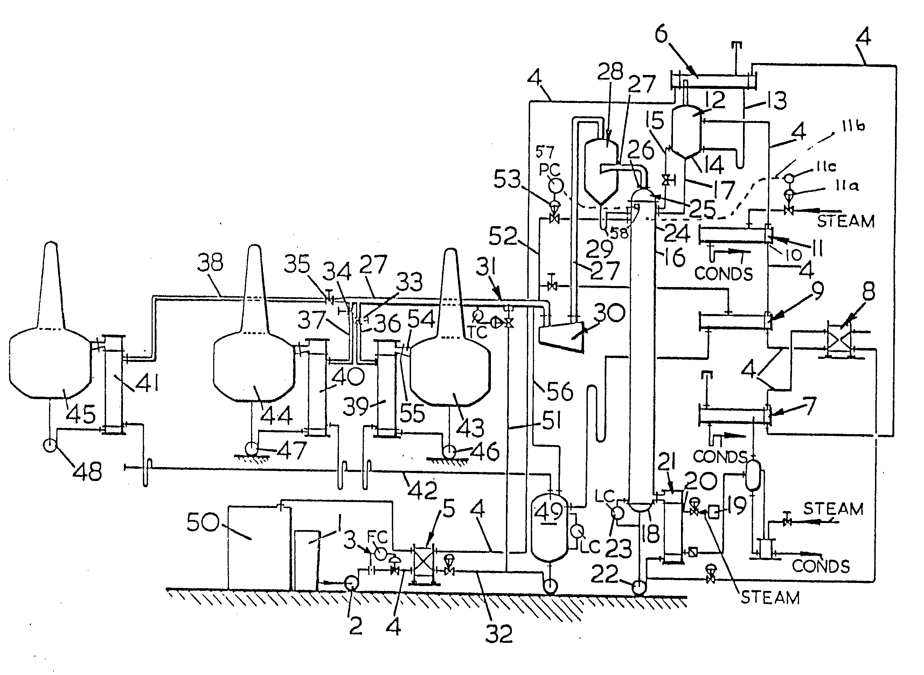

Further preferred features and advantages of the present invention will appear from the following description given by way of example of a preferred embodiment thereof illustrated with reference to the accompanying Figure which is a schematic circuit diagram of a malt whisky distilling plant.

In the plant, wash from the fermented wash stock tank 1 is pumped by the wash feed pump 2 under the influence of wash feed flow control means 3 via a wash feed pipe 4 which conducts the wash through, in turn, a low wines cooler 5, a degasser vent condenser 6, a reboiler condensate flash heater 7, a pot ale/wash heater 8 and a low wines vapour/wash heater 9, so that, at the inlet 10 of the steam/wash preheater 11 the wash temperature is in the range 87° to 93°C. In the steam/wash preheater 11 the wash is raised to a predetermined temperature value consistent with a controlled predetermined pressure value pertaining in the wash distillation column top such that the required alcohol composition in the overhead vapour is obtained. The control of this pre-determined temperature is conveniently achieved by automatically modulating the steam flow to the steam/wash preheater 11, by means of the temperature control valve 11a, which is activated by a temperature control loop 11b connected from the distillation column top to the valve 11a via a controller means 11c.

In the abovementioned heaters 8, 9 and preheater 11, the first mentioned fluid is in each case the one supplying the heat to the second so that the temperature of the wash is progressively raised as it passes through said heaters and preheater.

From the steam/wash preheater 11 the wash is introduced into a degasser vessel 12 where non-condensible gases, mainly carbon dioxide and air, are liberated from the wash and dispatched to the atmosphere via the degasser vent condenser 6, condensed liquid being returned from the degasser condenser 6 via a condensate pipe 13 to the degasser vessel 12. The small amount of heat required to accomplish the degassing function is supplied by passing a limited proportion of low wines vapour as will be further explained hereinbelow to the base 14 of the degasser vessel 12 via a pipe 15. The wash column 16 is a generally conventional multi-plate continuous distillation column and as the wash passes down through the column 16, it is subjected to the stripping action of the ascending vapours. On reaching the base 18 of the column 16 the wash is completely alcohol free and is substantially similar in nature and composition to the residual pot ale remaining after a conventional batch wash still distillation and is accordingly referred to herein as "pot-ale".

The necessary heat for distillation of the preheated wash in the column 16 is supplied to the column 16 by introducing steam from a steam generator 19 into the shell side 20 of a reboiler 21, wherein on condensing of the steam, its latent heat is transferred to pot ale circulating through the reboiler 21 under the action of a reboiler circulation pump 22. The pot ale is discharged from the base of the wash column under the influence of a pot ale level control 23.

Also at the upper end portion 24 of the column 16, in fact at the top 25 of the column 16, is provided an outlet 26 for the low wines (alcohol containing) vapour that has been distilled off from the wash passing down through the column 16. The low wines vapour issuing from the outlet 26 is conveyed by a low wines conduit 27 through, in turn, a knock-out vessel 28 for removing any liquid that may be present in the low wines vapour and is returned to the column 16 via a return pipe 29; a mechanical vapour compressor 30, conveniently electrically or steam passout turbo-alternator operated; a de-superheater 31 constituted by an injection means disposed for injecting a small amount of liquid low wines, from the downstream liquid wines circuit 32 described below, into the vapour wherein it is vapourised thereby reducing the temperature of any superheated low wines vapour sufficiently to obtain a saturated vapour which is readily condensable as soon as its temperature is reduced below its boiling point; and three valve means 33—35 controlling respective branch portions 36—38 of the low wines conduit 27, which branch portions lead through the shell sides of three respective heat exchangers 39—41 to a low wines condensate conduit 42.

Batches of low wines in liquid form are circulated through respective ones of the heat exchangers 39—41 and respective associated spirit stills 43—45 with the aid of pumps 48—48. Whilst the distillation column 16 is normally operated more or less continuously, the batch stills 43—45 are operated alternatively so that when distillation is taking place in one or at most two stills, charging, emptying or any other necessary operations may take place with the remaining still(s). This is achieved by operating the valves 33—35 so that low wines vapour is supplied only to the heat exchanger(s) of the batch still(s) in which distillation is proceeded.

The low wines condensate conduit 42 leads to a low wines buffer vessel 49. Since the heat contained in the low wines vapour is slightly in excess of the spirit still heating requirement, part of the vapour is conveniently directed, via pipe 53, to the low wine vapour/wash heater 9, the condensed low wines therefrom then also running to the low wines buffer vessel 49 to combine with the remaining bulk of the condensed low wines and thence via the low wines/wash heater 5 (in order to extract more heat) to a low wines storage tank 50. A small proportion of the low wines condensate is divered via a de-superheat supply conduit 51 to the de-superheat means referred to earlier.

In order to maintain a suitable pressure control in the wash column 16 a small proportion of the low wines vapour is returned from the downstream side of the compressor 30 via a vapour return conduit 52 with a suitable pressure control means 53 as further explained hereinbelow.

Further details of the method of operation of the invention will appear from the following example of the operation of the above system.

Example

The above described distillation plant utilises three spirit stills, of which two are distilling at any one time and the third still is in the process of being either charged with low wines and feints or discharging spent lees. For each still, the distillation cycle time for a batch is 470 minutes and the cycle is split into two half periods of 235 minutes each. The first half period of the cycle comprises of the sensible heating of the low wines charge, foreshot fraction distillation and spirit fraction distillation; the second half period comprises of the tailings fraction distillation. In the first half of the cycle, heat is supplied to the still at a constant rate; the speed at which the spirit fraction is distilled determining the heating rate.

In the second half of the cycle and rate at which the heat is supplied to the still is also constant, but since the tailings distillation is essentially an alcohol stripping operation, the heating can be applied at a greater rate than in the first half of the cycle.

Since the spirit still distillation is carried out in a traditional i.e. batchwise manner it will be appreciated that it is essential to synchronise the operation of the continuous distillation column with the distillation rate of the spirit stills such that the amount of low wines produced from the wash column is not only sufficient to satisfy the heat requirements of the spirits stills but is also desirably, for a practical operating form of process, sufficient in terms of quantity to provide adequately sized charges (to be drawn in due course from the low wines storage tank) for subsequent spirit still distillations. Therefore, the basis of the wash column mass balance is dictated by the overall rate at which the spirit distillation is carried out and this in turn will vary according to the numbers of spirit stills which are simultaneously in operation and the rate at which the various fractions are distilled.

Thus the three spirit stills are operated in sequence in such a manner that the time span for the first half of the distillation cycle on the No. 2 still (44) coincides exactly with the second half of the distillation cycle on No. 1 still (43), and furthermore the time span for the second half of the distillation cycle on the No. 2 still (44) coincides exactly with the first half of the distillation cycle on the No. 3 still (45), and sequentially the time span for the second half of the distillation on the No. 3 (45) still coincides exactly with the first half of the distillation cycle on the No. 4 still (43). Under this operational regime, twenty-six spirit still distillations are processed in 101.833 hours per week by the application of a constant heat load supplied from low wines vapour emanating from the wash column.

The total heat requirement for a batch spirit still distillation is 19,270,571 KJ. The operational time span for each still distillation is 470 minutes, which is split into periods of 235 minutes each.

The heat requirements for the first half of the cycle=6,988,964 KJ or, translated into a heating rate of 1,784,264 KJ/hour. The heat requirement for the second half of the cycle=12,281,607 KJ or, translated into a heating rate of 3,135,463 KJ/hour. Since the synchronisation technique requires the first half of the distillation cycle on one still to operate coincident in time span to the second half of the distillation cycle on a second still, the heat required to sustain the spirit distillation is the summation of the heat requirements for the two halves of the distillation cycle, which is 4,919,727 KJ/hour.

The low wines vapour flow of 2,533.7 Kg/hour at a strength of 18.87 per cent by weight alcohol, and containing a latent heat of 8,149 KJ/kg mole, will supply the spirit still heat exchangers at 5,100, 138 KJ/hour.

As can be appreciated the above figure is in excess of the spirit stills heat requirement by 180,411 KJ/hour, and the relevant amount of low wines vapour can be diverted from the entry to the still heaters and utilised in the low wines vapour/wash heater.

The additional power requirement for the mechanical compressor and the various circulating pumps was 85 KWhr per hour which is approximately equivalent to 679,320 KJ/hr. The heat energy requirement of the column was 5,671,099 KJ/hr.

Thus the total annual energy requirement of the above apparatus of the invention was $27.16 \times 10^9$KJ whilst that of an equivalent whisky output previously known system was $46.917 \times 10^9$KJ. This corresponds to an energy saving of some 42%.

The above described process conditions have been chosen so that the continuous distillation wash column produces low wines vapour and subsequently low wines liquid in substantially equal amounts with substantially similar composition to those obtained using a conventional batch type wash still operator from equal amounts of fermented wash in accordance with a preferred form of the present invention. Even though in a batch type wash still operation distillation is carried out essentially at atmospheric pressure the vapour-liquid equilibrium relationship constantly changes throughout the course of the distillation. As the alcohol is distilled and the amount remaining in the liquid bulk diminishes, the temperature of the distillation increases and thus the composition of the distillate varies being stronger in alcohol content at the beginning of distillation and weaker at the end.

Using the continuous distillation column it is desirable to operate the column at a substantially fixed temperature and pressure, which produces a low wines vapour having a substantially fixed composition, the temperature and pressure being selected so that the low wines obtained is substantially equal in quantity and composition to that obtained from the conventional batch still operation. In the above-described embodiment the pressure in the column 16 is controlled by recycling thereto a small amount (up to about 0.5% by volume) of the compressed low wines vapour via the conduit 52 and pressure control 53 conventiently in the form of a 'V' port pressure maintaining type of valve modulated by a controller 57 connected to a pressure sensor 58 in the distillation column top.

The low wines being distilled in each spirit/-still 43—45 is also maintained under a back pressure as it is circulated through the heat exchanger 39—41, by means of a restricting valve 55 or orifice in the pipe 54 connecting the top of the heat exchanger 39—41 to the spirit still 43—45 or by returning the low wines heated in the heat exchanger 39—41 to the bottom of the spirit still via an internally fitted pipe, so that the low wines liquid heated in the heat exchanger will not distill until it actually reenters the spirit still. In an alternative form of arrangement the heat exchanger(s) would be actually located within the spirit still(s).

The pressure level inside the shell side of the heat exchanger (low wines vapour circuit part) is dependent on the discharge pressure from the compressor 30. The latter pressure is normally set at a fixed level. The pressure in the low wines buffer vessel 49 is substantially equalized with the level in the rest of the system, so that condensed low wines can simply run through the condensate conduit 42 under the influence of gravity so the buffer vessel, by means of the provision of a small bore pressure equalization pipe 56 extending between the top of the low wines buffer vessel 49 and the downstream side of the compressor 30.

## Claims

1. A process for the production of an alcoholic beverage which process comprises a first alcohol distillation step (16) wherein a first liquid having a first alcohol content is distilled to produce a first alcohol containing vapour having a second elevated alcohol content higher than that of said first liquid, which first vapour is condensed to a second liquid having a second, elevated, alcohol content, and a second alcohol distillation step (43—45) wherein said second liquid is distilled to produce a second alcohol containing vapour which is condensed to a third liquid having a third, further elevated, alcohol content characterized in that said first distillation step is carred out in a continuous distillation column, the first alcohol containing vapour being compressed (30), and, if necessary, desuperheated (31), so as to produce a saturated vapour, and at least part of the compressed saturated alcohol containing vapour passed through a heat exchanger (39—41) through which heat exchanger is circulated at least part of the second liquid having a lower temperature than the condensation temperature of said saturated vapour so that heat is absorbed by said second liquid and at least part of said saturated vapour condensed to said second liquid and in that in said second alcohol distillation step a batch of said second liquid is distilled in a batch distillation step, said batch of second liquid being circulated through a said heat exchanger (39—41) in a spirit still (43—45) connected thereto for supplying heat to said batch of second liquid from said first vapour, so as to recover in said third liquid a substantial proportion of the minor constituents and congeners of the liquid distillate product recovered in a conventional double batch distillation process for the production of said alcoholic beverage.

2. A process as claimed in Claim 1 wherein said batch of said second liquid is supplied with additional heat from another source for distillation of said batch of second liquid in said spirit still (43—45).

3. A process as claimed in Claim 2 wherein said first alcohol distillation step (16) is carried out substantially continuously over an extended period of time and said saturated vapour is produced substantially continuously and circulated selectively through alternate ones of the respective heat exchange means (39—41) of a plurality of spirit stills (43—45) for sequential distillation of different batches of said second liquid in said spirit stills (43—45) for sequential distillation of different batches of said second liquid in said spirit stills (43—45).

4. A process as claimed in Claim 3 wherein the vapour is selectively circulated through the heat exchange means (39—41) of alternate ones of three spirit stills (43—45) and respective valve means (33—35) are operated so that said vapour is simultaneously supplied to the heat exchange means (39) of one spirit still (43) in a first phase for a first half of the distillation of the batch of said second liquid therein, and to the heat exchange means (40) of a second spirit still (44) in a second phase for a second half of the distillation of the batch of said second liquid therein, whilst not being supplied to the heat exchange means (41) of a third said spirit still (45) in a third phase; said valve means (33—35) being operated to change the distribution of said vapour amongst said heat exchange means (39—41) as said spirit stills (43—45) each progress through said three phases.

5. A process according to Claim 3 or Claim 4 wherein part of the compressed first vapour is recycled to the uncompressed first vapour produced in said first distillation step so as to control the pressure in said first distillation step and wherein the temperature in said first distillation step is controlled, so that the alcohol content of the first vapour obtained from said first distillation step is controlled.

6. A process of reducing heat energy consumption in a process for the production of malt whisky, according to any one of the preceding claims wherein said first liquid comprises fermented wash which is distilled in a continuous distillation column (16) to produce a low wines vapour constituting said first alcohol containing vapour.

7. An apparatus for use in a process according to any one of Claims 1 to 6 which apparatus comprises a continuous distillation column (16) having a lower end portion (18) connected to a reboiler (21) provided with a steam inlet (20) connected to a steam supply for heating, in said reboiler (1), residual liquor from said first distillation step circulating through said reboiler (21) and said lower end portion (18) of said column (16), and an upper portion (24) provided with a fermented liquid inlet (17) and a first alcohol containing vapour outlet (26), connected via a compressor (30), a desuperheating means (31), and valve means (33—35), to at least two heat exchange means (39—41) arranged for heating batches of the second alcohol containing liquid being distilled in respective batch distillation stills (43—45), said valve means (33—35) being arranged for selectively passing said vapour to alternate ones of said heat exchange means (39—41).

8. An apparatus as claimed in Claim 7 wherein each of said at least two heat exchange means (39—41) is connected to a respective spirit still (43—45) for circulation of a said batch of said second liquid through said heat exchange means (39—41) and said still (43—45) for distillation in said spirit still (43—45).

9. An apparatus as claimed in Claim 8 which includes three said heat exchange means (39—41) and said valve means (33—35) are arranged to be operable for permitting simultaneous passage of the saturated vapour to not more than two of said heat exchange means (39—41) at any given time.

10. An apparatus as claimed in Claim 9 wherein the valve means (33—35) are arranged for permitting simultaneous passage of the saturated vapour, in use of said apparatus to the heat exchange means (39) of one spirit still (43) in a first phase for a first half of the distillation of the batch of second liquid therein and to the heat exchange means (40) of a second spirit still (44) in a second phase for a second half of the distillation of the batch of second liquid therein, whilst preventing passage of said vapour to the heat exchange means (41) of a third spirit still (45) in a third phase, said valve means (33—35) also being arranged to be operable to change the distribution of said saturated vapour amongst said heat exchange means as said still (43—45) each progress through said three phases.

11. An apparatus as claimed in any one of Claims 7 to 10 wherein is provided a return passage (52) extending from the high pressure side of said compressor (30) to the low pressure side thereof via a pressure control means (53) so as to recycle, in use of the apparatus, part of the compressed first vapour to the distillation column (16) in a controlled amount, thereby to control the pressure in said column (16) and thus the alcohol content of the first vapour obtained from said column (16).

12. A process as claimed in Claim 1 wherein part of said first vapour is circulated through a heat exchanger through which is also circulated a residual liquid remaining after the distillation of said first liquid or a heat exchange fluid arranged for circulation so as to transfer heat to said residual liquid, for heating of said residual liquid to aid concentration thereof by evaporation therefrom.

13. A process for the production of malt whisky, according to Claim 12 wherein fermented wash is distilled in said continuous distillation column (16) to provide a low wines vapour and a residual pot ale, which pot ale is substantially concentrated to a syrup, for use in an animal feed, by means of heat extracted from said low wines vapour.

**Revendications**

1. Procédé pour la production d'une boisson alcoolisée, lequel procédé comprend une première étape de distillation d'alcool (16) dans laquelle un premier liquide ayant une première teneur en alcool est distillé pour produire une première vapeur contenant de l'alcool ayant une seconde teneur en alcool augmentée, supérieure à celle dudit premier liquide, laquelle première vapeur est condensée en un second liquide ayant une seconde teneur en alcool, augmentée, et une seconde étape de distillation d'alcool (43—45) dans laquelle ledit second liquide est distillé pour produire une seconde vapeur contenant de l'alcool qui est condensée en un troisième liquide ayant une troisième teneur en alcool, encore augmentée, caractérisé en ce que ladite première étape de distillation est effectuée dans une colonne à distiller en continu, la première vapeur contenant de l'alcool étant comprimée (30), et, si nécessaire désurchauffée (31), de manière à produire une vapeur saturée, et au moins une partie de la vapeur comprimée saturée contenant de l'alcool étant envoyée à travers un échangeur de chaleur (39—41), échangeur de chaleur à travers lequel on fait circuler au moins une partie du second liquide présentant une température inférieure à la température de condensation de ladite vapeur saturée de manière à faire absorber de la chaleur par ledit seconde liquide et au moins une partie de ladite vapeur saturée étant condensée en ledit second liquide et en ce que dans ladite seconde étape de distillation de l'alcool une cuvée dudit second liquide est distillée dans une étape de distillation en discontinu, ladite cuvée du second liquide étant véhiculée à travers undit échangeur de chaleur (39—41) dans un alambic à spiritueux qui, lui, est relié pour fournir de la chaleur à ladite cuvée de second liquide provenant de ladite première vapeur, de manière à récupérer dans ledit troisième liquide une proportion sensible des constituants et congénères mineurs du produit de distillat liquide récupéré dans un procédé classique de distillation à double cuvée pour la production de ladite boisson alcoolisée.

2. Procédé selon la revendication 1 dans lequel ladite cuvée dudit second liquide reçoit de la chaleur supplémentaire provenant d'une autre source pour la distillation de ladite cuvée de seconde liquide dans ledit alambic à spiritueux (43—45).

3. Procédé selon la revendication 2 dans lequel ladite première étape de distillation de l'alcool (16) est réalisée de façon sensiblement continue pendant une période de temps étendue et ladite vapeur saturée est produite de façon sensiblement continue et est amenée à circuler sélectivement dans des moyens d'échange de chaleur respectifs (39—41) par unités alternées d'une pluralité d'alambics à spiritueux (43—45) pour une distillation séquentielle de différentes cuvées dudit second liquide dans lesdits alambics à spiritueux (43—45).

4. Procédé selon la revendication 3 dans lequel on fait circuler sélectivement la vapeur à travers les moyens d'échange de chaleur (39—41) de trois alambics à spiritueux (43—45) par unités alternées et on fait fonctionner des moyens de soupapes respectifs (33—35) de manière à fournir simultanément ladite vapeur au moyen d'échange de chaleur (39) d'un alambic à spiritueux (43) dans une première phase pour une première moitié de la distillation de la cuvée dudit second liquide dedans, et aux moyens d'échange de chaleur (40) d'un second alambic à spiritueux (44) dans une seconde phase pour une seconde moitié de la distillation de la cuvée dudit second liquide dedans, tandis qu'elle n'est pas fournie aux moyens d'échange de chaleur (41) d'un troisième dit alambic à spiritueux (45) dans une troisième phase; lesdits moyens de soupape (33—35) étant utilisés pour modifier la distribution de ladite vapeur dans lesdits moyens d'échange de chaleur (39—41) au fur et à mesure que lesdits alambics à spiritueux (43—45) avancent chacun dans lesdites trois phases.

5. Procédé selon la revendication 3 ou 4 dans lequel une partie de la première vapeur comprimée est recyclée dans la première vapeur non comprimée obtenue dans ladite première étape de distillation de manière à régler la pression dans ladite première étape de distillation et dans lequel la température dans ladite première étape de distillation est réglée de manière à régler la teneur en alcool de la première vapeur obtenue à partir de ladite première étape de distillation.

6. Procédé pour réduire la consommation en énergie thermique dans un procédé pour la production de whisky de malt, selon l'une quelconque des revendications précédentes, dans lequel ledit premier liquide comprend de la vinasse fermentée qui est distillée dans une colonne à distiller en continu (16) pour produire une vapeur de petits vins constituant ladite première vapeur contenant de l'alcool.

7. Appareil à utiliser dans un procédé selon l'une quelconque des revendications 1 à 6, lequel appareil comprend une colonne à distiller en continu (16) possédant une partie terminale inférieure (18) reliée à un rebouilleur (21) muni d'un orifice d'entrée de vapeur (20) relié à une admission de vapeur pour le chauffage, dans ledit rebouilleur (21), de la liqueur résiduelle provenant de ladite première étape de distillation circulant à travers ledit rebouiller (21) et ladite partie terminale inférieure (18) de ladite colonne (16), et un partie terminale supérieure (24) munie d'un orifice d'entrée de liquide fermenté (17) et un orifice de sortie de première vapeur contenant de l'alcool (26), relié par un compresseur (30), un moyen de désurchauffage (31), et des moyens de soupapes (33—35), à au moins deux moyens d'échange de chaleur (39—41) disposés pour chauffer des cuvées du second liquide contenant de l'alcool en cours de distillation dans les alambics respectifs de distillation en discontinu (43—45), lesdits moyens de soupapes (33—35) étant disposés pour faire passer sélectivement ladite vapeur dans lesdits moyens d'échange de chaleur (39—41) par unités alternées.

8. Appareil comme revendiqué à la revendication 7 dans lequel chacun desdits deux au moins moyens d'échange de chaleur (39—41) est relié à un alambic à spiritueux correspondant (43—45) pour la circulation d'une dite cuvée dudit second liquide à travers lesdits moyens d'échange de chaleur (39—41) et ledit alambic (43—45) pour la distillation dans ledit alambic à spiritueux (43—45).

9. Appareil comme revendiqué à la revendication 8 qui comprend trois dits moyens d'échange de chaleur (39—41) et lesdits moyens de soupapes (33—35) sont disposés pour être manoeuvrables pour permettre le passage simultané de la vapeur saturée dans pas plus de deux desdits moyens d'échange de chaleur (39—41) à un moment donné quelconque.

10. Appareil comme revendiqué à la revendication 9 dans lequel les moyens de soupapes (33—35) sont disposés pour permettre le passage simultané de la vapeur saturée, lors de l'utilisation dudit appareil, dans le moyen d'échange de chaleur (39) d'un alambic à spiritueux (43) dans une première phase pour une première moitié de la distillation de la cuvée du second liquide qui s'y trouve et dans le moyen d'échange de température (40) d'un second alambic à spiritueux (44) dans une seconde phase pour une seconde moitié de la distillation de la cuvée de second liquide qui s'y trouve, tout en empêchant le passage de ladite vapeur dans le moyen d'échange de chaleur (41) d'un troisième alambic à spiritueux (45) dans une troisième phase, lesdits moyens de soupapes (33—35) étant également disposés de manière à être manoeuvrables pour modifier la distribution de ladite vapeur saturée dans lesdits moyens d'échange de chaleur au fur et à mesure que lesdits alambics (43—45) progressent chacun dans les trois dites phases.

11. Appareil comme revendiqué dans l'une quelconque des revendications 7 à 10 dans lequel est prévu un passage retour (52) s'étendant du côté haute pression dudit compresseur (30) à son côté basse pression par un moyen de contrôle de pression (53) de manière à recycler, lors de l'utilisation de l'appareil, une partie de la première vapeur comprimée dans la colonne de distillation (16) en une quantité contrôlée, réglant ainsi la pression dans ladite colonne (16) et, par conséquent, la teneur en alcool de la première vapeur obtenue à partir de ladite colonne (16).

12. Procédé comme revendiqué à la revendication 1 dans lequel on fait circuler une partie de ladite première vapeur à travers un échangeur de chaleur dans lequel on fait également circuler un liquide résiduel restant après la distillation dudit premier liquide ou un fluide d'échange de chaleur destiné à circuler de manière à transférer de la chaleur audit liquide résiduel, pour réchauffer ledit liquide résiduel dans le but de favoriser sa concentration par son évaporation.

13. Procédé pour la fabrication du whisky de malt, selon la revendication 12 dans lequel la vinasse fermentée est distillée dans ladite colonne à distiller en continu (16) pour fournir une vapeur de petits vins et une ale (bière légère) "de pot" résiduaire, laquelle ale "de pot" est concentrée sensiblement en un sirop, à utiliser dans une alimentation pour animaux, au moyen de la chaleur extraite à partir de ladite vapeur de petits vins.

**Patentansprüche**

1. Verfahren zur Herstellung eines alkoholischen Getränkes, welches Verfahren einen ersten Alkoholdestillationsschritt (16) umfaßt, durch welchen eine erste Flüssigkeit mit einem ersten Alkoholgehalt destilliert wird, um einen ersten alkoholhaltigen Dampf mit einem zweiten erhöhten Alkoholgehalt zu erzeugen, der höher als jener der ersten Flüssigkeit ist, wobei der erste Dampf zu einer zweiten Flüssigkeit kondensiert, die einen zweiten, erhöhten Alkoholgehalt aufweist, und einen zweiten Alkoholdestillationsschritt (43—45), bei welchem die zweite Flüssigkeit destilliert wird, um einen zweiten alkoholhaltigen Dampf zu erzeugen, welcher zu einer dritten Flüssigkeit kondensiert wird, die einen dritten, weiter erhöhten Alkoholgehalt aufweist, dadurch gekennzeichnet, daß der erste Destillationsschritt in einer kontinuierlichen Destillationskolonne durchgeführt wird, der erste alkoholhältige Dampf komprimiert wird (30), und, wenn nötig, soweit entüberhitzt (31) wird, daß ein gesättigter Dampf erzeugt wird, zumindest ein Teil des komprimierten alkoholhältigen gesättigten Dampfes durch einen Wärmetauscher (39—41) geführt wird, durch welchem Wärmetauscher zumindest ein Teil der zweiten Flüssigkeit zirkuliert wird, die eine niedrigere Temperatur aufweist als die Kondensationstemperatur des gesättigten Dampfes, sodaß Wärme von der zweiten Flüssigkeit aufgenommen wird und zumindest ein Teil des gesättigten Dampfes zu der zweiten Flüssigkeit kondensiert wird, und daß beim zweiten Alkoholdestillationsschritt eine Charge der zweiten Flüssigkeit in einem Chargen-Destillationsschritt destilliert wird, die Charge der zweiten Flüssigkeit durch den Wärmetauscher (39—41) zirkuliert wird, der mit der Sprit-Destillationsblase (43—45) verbunden ist, um der Charge der zweiten Flüssigkeit vom ersten Dampf Wärme zuzuführen, sodaß dadurch in der dritten Flüssigkeit ein wesentlicher Anteil der Nebenbestandteile und verwandten Stoffe des flüssigen Destillationsproduktes zurückgewonnen wird, welche in einem konventionellen Doppelchargen-Destillationsprozeß für die Erzeugung besagten alkoholischen Getränkes wiedergewonnen werden.

2. Verfahren nach Anspruch 1, bei welchem die Charge der zweiten Flüssigkeit mit zusätzlicher Wärme von einer anderen Quelle für die Destillation der Charge der zweiten Flüssigkeit in der Spritdestillationsblase (43—45) versorgt wird.

3. Verfahren nach Anspruch 2, bei welchem der erste Alkoholdestillationsschritt (16) im wesentlichen kontinuierlich über einen ausgedehnten Zeitraum durchgeführt wird und der gesättigte Dampf im wesentlichen kontinuierlich erzeugt und selektiv durch alternierende Wärmetauschvorrichtungen (39—41) einer Mehrzahl von Spritdestillationsblasen (43—45) zur sequentiellen Destillation verschiedener Chargen der zweiten Flüssigkeit in den Spritdestillationsblasen (43—45) zirkuliert wird.

4. Verfahren nach Anspruch 3, bei welchem der Dampf selektiv durch die Wämetauschvorrichtungen (39—41) von alternierenden von drei Spritdestillationsblasen (43—45) zirkuliert wird, und entsprechende Ventilvorrichtungen (33—35) so betätigt werden, daß der Dampf gleichzeitig der Wärmetauschvorrichtung (39) eine Spritdestillationsblase (43) in einer ersten Phase für eine erste Hälfte der Destillation der Charge der zweiten Flüssigkeit darin und der Wärmetauschvorrichtung (40) einer zweiten Spritdestillationsblase (44) in einer zweiten Phase für eine zweite Hälfte der Destillation der Charge der zweiten Flüssigkeit darin, wogegen er nicht der Wärmetauschvorrichtung (41) einer dritten Spritdestillationsblase (45) in einer dritten Phase zugeführt wird; die Ventilvorrichtungen (33—35) werden dabei so betätigt, daß der Dampf abwechselnd den Wärmetauschern (39—41) zugeführt wird in dem Maße, als besagte Spritdestillationsblasen (43—45) jeweils die besagten drei Phasen durchlaufen.

5. Verfahren nach Anspruch 2 oder 4, bei welchem ein Teil des komprimierten ersten Dampfes zum unkomprimierten ersten Dampf, der in dem ersten Destillationsschritt erzeugt wird, derart zurückgeführt wird, daß dadurch der Druck im ersten Destillationsschritt geregelt wird, und bei welchem die Temperatur in dem ersten Destillationsschritt derart geregelt wird, daß dadurch der Alkoholgehalt des ersten Dampfes, der aus dem ersten Destillationsschritt erhalten wird, gesteuert wird.

6. Verfahren zur Verringerung des Energieverbrauches in einem Herstellungsverfahren von Malz-Whisky, nach jedem der vorangehenden Ansprüche, bei welchem die erste Flüssigkeit aus vergorener Maische besteht, welche in einer kontinuierlichen Destillationskolonne (16) destilliert wird, um Lutterdampf zu erzeugen, welcher den ersten alkoholhaltigen Dampf darstellt.

7. Vorrichtung zur Verwendung in einem Verfahren nach jedem der Ansprüche 1 bis 6, welche Vorrichtung eine kontinuierliche Destillationskolonne (16) umfaßt, deren unterer Endteil (18) mit einem mittels Dampfeinlaß (20) an eine Dampfquelle angeschlossenen Aufkocher (21) verbunden ist, um im Aufkocher (21) Rückstandsflüssigkeit vom ersten Destillationsschritt aufzuheizen, die durch den Aufkocher (21) und den unteren Endteil (18) der Kolonne (16) zirkuliert und deren oberer Endteil (24) mit einer Zuleitung für vorgorene Flüssigkeit (17) und einem Auslaß für einen ersten alkoholhaltigen Dampf (26) versehen ist, der über einen Kompressor (30), eine Heißdampfkühlvorrichtung (31) und Ventilvorrichtungen (33—35) mit mindestens zwei Wärmetauschvorrichtungen (39—41) verbunden ist, welche zum Erhitzen von Chargen der zweiten alkoholhältigen Flüssigkeit vorgesehen sind, die in den entsprechenden Chargen Destillationsblasen (43—45) destilliert werden, wobei die Ventilvorrichtungen (33—35) so angeordnet sind, daß der Dampf selektiv durch alternierende Wärmetauschvorrichtungen (39—41) geführt wird.

8. Vorrichtung nach Anspruch 7, bei welcher jede der mindestens zwei Wärmetauschvorrichtungen (39—41) mit einer entsprechenden Sprit-Destillationsblase (43—45) verbunden ist zur Zirkulation einer Charge der zweiten Flüssigkeit durch die Wärmetauschvorrichtungen (39—41) und die Destillationsblase (43—45) zwecks Destillation in der Sprit-Destillationsblase (43—45).

9. Vorrichtung nach Anspruch 8, welche drei Wärmetauschvorrichtungen (39—41) einschließt, wobei die Ventilvorrichtungen (33—35) so angeordnet sind, daß durch ihre Betätigung der gleichzeitige Durchfluß des gesättigten Dampfes zu nicht mehr als zwei der Wärmetauschvorrichtungen (39—41) zu irgend einer Zeit gestattet wird.

10. Vorrichtung nach Anspruch 9, bei welcher die Ventilvorrichtungen (33—35) so angeordnet sind, daß sie den gleichzeitigen Durchfluß des gesättigten Dampfes beim Betrieb der besagten Vorrichtungung zur Wärmetauschvorrichtung (39) einer Spritdestillationsblase (43) in einer ersten Phase für eine erste Hälfte der Destillation der darin befindlichen Charge der zweiten Flüssigkeit und zur Wämetauschvorrichtung (40) einer zweiten Spritdestillationsblase (44) in einer zweiten Phase für eine zweite Hälfte der Destillations der darin befindlichen Charge der zweiten Flüssigkeit gestatten, während sie den Durchfluß des Dampfes zur Wärmetauschvorrichtung (41) einer dritten Spritdestillationsblase (45) in einer dritten Phase verhindern, wobei die Ventilvorrichtungen (33—35) auch so angeordnet sind, daß sie zur abwechselnden Verteilung des gesättigten Dampfes auf die Wärmetauschvorrichtungen betätigt werden können, indem besagte Destillationsblasen (43—45) jeweils nacheinander die dreie Phasen durchlaufen.

11. Vorrichtung nach einem der Ansprüche 7 bis 10, bei welcher eine Rückführeinrichtung (52) vorgesehen ist, die sich von der Hochdruckseite des Kompressors (30) zu dessen Niederdruckseite über eine Druckregelvorrichtunge (53) erstreckt, um darin beim Betrieb der Vorrichtung einem Teil des komprimierten ersten Dampfes zur Destillationskolonne (16) in kontrollierter Menge zurückzuführen, dabei den Druck in besagter Kolonne (16) zu regeln und damit den Alkoholgehalt des ersten Dampfes, der aus der Kolonne (16) erhalten wird.

12. Verfahren nach Anspruch 1, bei welchem ein Teil des ersten Dampfes durch einen Wärmetauscher geleitet wird, durch welchen auch eine Rückstandsflüssigkeit, die nach der Destillation der ersten Flüssigkeit übrig bleibt, zirkuliert, oder ein zur Zirkulation vorgesehenes Wärmetauschfluidum zur Übertragung von Wärme auf die Rückstandsflüssigkeit, um die Rückstandsflüssigkeit zur Unterstützung ihrer Konzentration durch Abdampfen daraus zu erhitzen.

13. Verfahren für die Herstellung von Malz-Whisky nach Anspruch 12, bei welchem vergorene Maische in der kontinuierlichen Destillationskolonne (16) destilliert wird, um einem Lutterdampf und Rückstandsschlempe zu liefern, welche Schlempe im wesentlichen zu einem Sirup zur Verwendung in einem Tierfutter mittels der Wärme, die dem Lutterdampf entzogen wird, konzentriert wird.